Europäisches Patentamt

European Patent Office

Office européen des brevets

(19)

(11) Numéro de publication: **0 378 278 B1**

(12) **FASCICULE DE BREVET EUROPEEN**

(45) Date de publication de fascicule du brevet: **17.08.94**    (51) Int. Cl.5: **B23H 7/04**, B23H 7/06

(21) Numéro de dépôt: **90200074.4**

(22) Date de dépôt: **11.01.90**

(54) **Dispositif et procédé de contrôle pour le découpage par électroérosion avec un fil électrode.**

(30) Priorité: **13.01.89 CH 98/89**

(43) Date de publication de la demande:
**18.07.90 Bulletin 90/29**

(45) Mention de la délivrance du brevet:
**17.08.94 Bulletin 94/33**

(84) Etats contractants désignés:
**DE ES FR GB IT SE**

(56) Documents cités:
**GB-A- 2 169 536**

(73) Titulaire: **CHARMILLES TECHNOLOGIES S.A.
8-10, rue du Pré-de-la-Fontaine
Zone industrielle de Satigny
CH-1217 Meyrin 1 (CH)**

(72) Inventeur: **Reynier, Alain
La Clé des Champs
Moens
F-01210 Ferney-Voltaire (FR)**
Inventeur: **Bosson, Jean-Michel
Chemin de Pralets 628
Le Pas de l'Echelle
F-74100 Annemasse (FR)**
Inventeur: **Crivelli, Lorenzo
4 chemin de Poussy
CH-1214 Vernier / GE (CH)**

(74) Mandataire: **Hugelin, Christiane
c/o CHARMILLES TECHNOLOGIES SA
Case postale 373
CH-1217 Meyrin 1 (CH)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

**Description**

La présente invention a trait à un dispositif et à un procédé de contrôle d'une machine d'électroérosion pour découper avec un fil-électrode faisant appel à la modification automatique, à certains moments de l'usinage, d'au moins un paramètre d'usinage.

Divers procédés ont été proposés dans l'état de la technique pour contrôler l'usinage par électroérosion en régulant automatiquement certains paramètres d'usinage, en particulier afin d'éviter la rupture du fil ou de pallier les défauts apparaissant lors de la découpe dans les angles (angles vifs rentrant ou sortant, ou sections convexes ou concaves présentés par la trajectoire à découper).

La plupart de ces procédés connus font appel à une régulation de la vitesse d'usinage, par exemple le brevet suisse 590.107, le brevet US 4.703.143 (a brevet décrit un procédé selon le préambule de la revendication 9), la publication EP 67 876, les demandes japonaises publiées sous les No 51-85589 et 58-40229. Toutefois, de nombreuses demandes japonaises, en particulier la publication 57-41129, décrivent une méthode selon laquelle on maintient au contraire une vitesse d'usinage constante en faisant varier la puissance des décharges proportionnellement à la variation de la surface d'érosion (due à une découpe dans un angle, à une variation d'épaisseur de la pièce ou à toute autre variation de la surface ou de la quantité de matière à éroder), afin de maintenir une densité d'énergie d'usinage donnée.

Mais aucune de ces méthodes ne diminuant le défaut apparaissant juste après le sommet des angles, le brevet suisse 654.233 recommande de diminuer la vitesse d'usinage aussi avant d'atteindre un sommet à angle vif et de conserver une vitesse d'usinage réduite pendant un intervalle de temps prédéterminé après l'avoir dépassé.

Selon la plupart des méthodes connues, la régulation de la vitesse d'usinage est réalisée
- soit progressivement et sans interrompre l'avance du fil,
- soit en arrêtant cette avance et en une seule étape. Il a par exemple été proposé de modifier cette vitesse
- progressivement et pendant un intervalle de temps donné (CH 654.233) ou sur une longueur prédéterminée de la trajectoire parcourue (JP 58-40229), tout en maintenant l'avance du fil,
- ou en arrêtant cette avance, et en modifiant en une seule étape la vitesse ou le régime et en usinant pendant une durée prédéterminée, à régime réduit et usinage stationnaire dans le cas d'un angle, ou en usinant à vitesse réduite dans le cas d'un arc; cette vitesse ou cette durée est calculée en fonction de la flèche du fil en ligne droite qui est déterminée en arrêtant l'usinage (EP 67 876), ou cette durée est celle demandée pour la disparition de la flèche (US 4 703 143).

Aucune de ces publications ne mentionne qu'il est avantageux de faire varier la vitesse ou le régime progressivement même lorsqu' on réalise cette variation en usinage stationnaire. Il semble que l'homme de l'art s'attendait à ce que des modifications graduelles d'un paramètre alors que l'avance du fil était arrêtée demanderait trop de temps et augmenterait donc trop la durée de l'usinage. C'est pourquoi , surtout dans le cas d'usinage à grande vitesse, l'état de la technique, par exemple le brevet US 4 725 706, préconise des changements de régime brutaux et n'associe jamais l'arrêt de l'avance à une variation graduelle simultanée d'un paramètre.

Le but de la présente invention est une régulation automatique d'au moins un paramètre d'usinage, permettant d'usiner plus rapidement qu'avec les méthodes connues tout en évitant la rupture du fil et en obtenant de bonnes précisions dans les angles des pièces usinées. Cette régulation doit permettre d'obtenir une géométrie satisfaisante, que la trajectoire présente des courbes convexes ou concaves ou des lignes brisées avec des angles rentrants ou sortants.

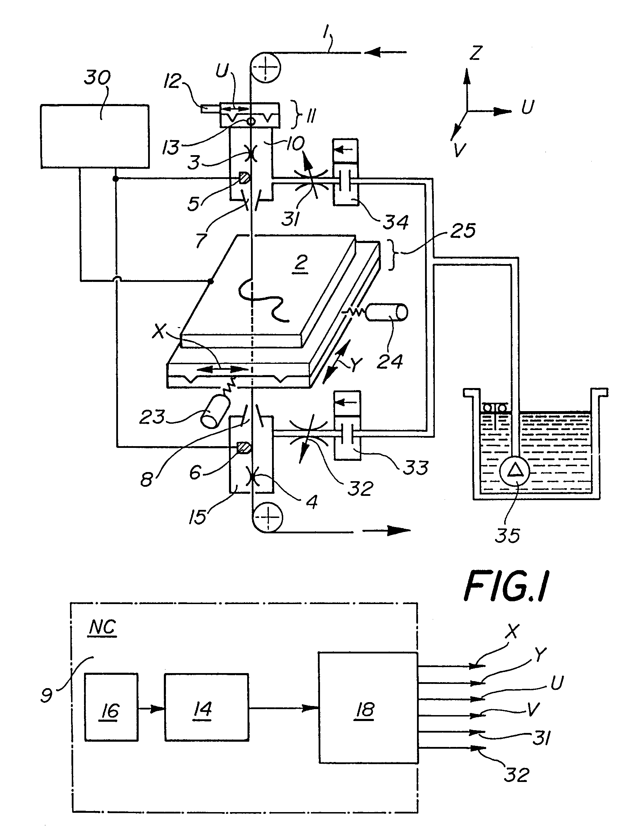

Rappelons brièvement le fonctionnement d'une machine à découper par électroérosion avec un fil-électrode, telle par exemple que celle illustrée à la figure 1 :
- un fil-électrode 1 défile en continu entre deux guides-fil 3 et 4 disposés de part et d'autre de la pièce 2 à usiner, grâce à des mécanismes (non représentés) entraînant le fil tout en le freinant de manière à lui donner une tension mécanique prédéterminée. Deux contacts frottants 5 et 6 amènent au fil-électrode le courant d'usinage émis par un générateur d'impulsions 30, tandis que deux buses d'injection 7 et 8 dirigent des jets de liquide d'usinage le long du fil 1 et dans la fente découpée dans la pièce 2 par ce dernier.
- Le guide-fil 3, la buse 7, et le contact 5 supérieurs sont disposés dans une tête d'usinage 10 mobile selon l'axe vertical Z, et en général, mobile également (selon des courses relativement petites) dans un plan horizontal, selon deux axes orthogonaux U et V, ce qui permet d'incliner le fil, le guide-fil inférieur 4 restant fixe. Ce mouvement (U, V) est réalisé grâce à une table à mouvements croisés 11, actionnée par un servo-mécanisme (de type connu, non représenté) comportant les deux moteurs 12 et 13. La tête d'usinage inférieure 15 contenant le guide-fil 4, la buse 8 et le contact 6 inférieurs reste fixe par rapport au bâti de la machine.

- La pièce 2 à usiner est fixée grâce à un mécanisme non représenté sur une table fixée elle-même sur le fond d'un bac de travail (non représenté) rempli de liquide d'usinage. Ce dernier est mobile selon deux axes horizontaux et orthogonaux X et Y grâce à une table à mouvements croisés 25, actionnée par un servo-mécanisme (de type connu, non représenté) comportant les deux moteurs 23 et 24.

- La trajectoire de découpe est mémorisée sur un support d'information 16 qui transmet ses données à l'unité de calcul 14 d'une commande numérique 9. Cette dernière comporte également une unité programmée de façon appropriée, au moins une mémoire et un lecteur, ainsi qu'une installation 18 (processeur ou interpolateur) contrôlant et commandant les déplacements relatifs entre la pièce-électrode 2 et le fil-électrode 1 en actionnant les moteurs 12, 13, 23 et 24, ainsi que d'autres paramètres d'usinage, telle la pression d'injection du liquide d'usinage en agissant sur les électrovannes 31 et 32. L'unité de calcul 14 évalue la trajectoire de découpe et transmet des signaux de commande à l'interpolateur 18 destiné à répartir les déplacements suivant les deux directions X et Y actionnés par les deux moteurs 23 et 24.

- Le générateur d'impulsions 30 est connecté entre les deux électrodes 1 et 2 de manière à émettre des impulsions de tension successives destinées à amorcer des décharges dans la zone d'usinage. Il reçoit des signaux de la commande numérique 9 (liaison non représentée) pour commander, par exemple, une variation de valeur donnée de la fréquence des impulsions, ou de la tension ou de la durée des étincelles.

- Un réservoir de liquide diélectrique alimente le bac de travail et les circuits d'injection vers les buses 7 et 8 des têtes d'usinage. Ces circuits sont schématisés à la figure 1 par la pompe 35 et les électro-vannes 31 et 32 reliées aux distributeurs de liquide 33 et 34. Le but mentionné ci-dessus est réalisé en utilisant la stratégie suivante pour faire varier de façon progressive le(s) paramètre(s) à modifier, cette modification étant, par exemple, une diminution:

- on arrête le mouvement relatif entre fil et pièce mais le générateur continue à envoyer des impulsions dans le fil;

- cet arrêt provoque la variation d'un deuxième paramètre (ou facteur témoin) qui évolue asymptotiquement vers une limite donnée, et on suit cette variation grâce à un organe approprié;

- dès que le facteur témoin a atteint une valeur de référence (au cours de son évolution vers une asymptote), on diminue la valeur V du paramètre à modifier, par exemple la fréquence des impulsions émises par le générateur, d'une quantité élémentaire (ou décrément) Q donnée;

- cette variation du paramètre provoque une variation du facteur témoin qui reprend ensuite progressivement sa valeur de référence, le gap se rétablissant;

- on décrémente à nouveau le paramètre, par exemple d'une quantité Q', et ainsi de suite jusqu'à le réduire à une valeur finale V', après avoir procédé par n décréments;

- on remet en route le mouvement relatif entre fil et pièce; le paramètre modifié étant en général un facteur de la puissance des décharges, sa réduction entraîne une diminution de la vitesse d'avance, réalisée automatiquement par les servo-mécanismes actionnant le mouvement relatif;

- on usine à ce régime réduit sur une distance $l_o$ de la trajectoire;

- puis, sans qu'il soit nécessaire d'arrêter le mouvement relatif, on augmente le paramètre d'une quantité Q'' donnée; ceci provoque une variation du facteur qui reprend ensuite progressivement sa valeur de référence, l'équilibre se rétablissant dans le gap; on procède par n' augmentations successives;

- lorsque le paramètre a de nouveau sa valeur initiale V, on poursuit l'usinage avec le régime de départ.

On a procédé ainsi à une double variation progressive par paliers du régime d'usinage, cette variation étant asservie aux fluctuations d'un facteur témoin donnant une image des conditions régnant dans la fente d'étincelage, c'est-à-dire soit sur l'atteinte de conditions d'usinage de référence, soit sur un retour à l'équilibre de l'usinage après chaque variation élémentaire. Les durées de ces paliers sont déterminées par le temps mis par les retours à des conditions d'usinage de référence ou d'équilibre successifs. Les quantités Q, Q', Q'' peuvent être égales ou différentes pour chacun des décréments et incréments (variations élémentaires) réalisés. Ces quantités peuvent être suffisamment faibles (et les paliers suffisamment nombreux) pour que la variation soit graduelle et pratiquement continue. La baisse de régime et la valeur finale correspondante V' du paramètre sont en particulier telles que la flèche du fil ait suffisamment diminué pour être acceptable, c'est-à-dire pour que les défauts de géométrie dus en partie à cette flèche aient disparu ou soient acceptables, vue la précision demandée. Mais ceci n'est qu'une des conséquences de la variation de régime qui a été réalisée.

Ajoutons que la stratégie décrite ci-dessus peut être aussi utilisée pour augmenter par paliers un paramètre (la tension mécanique du fil par exemple).

L'objet de la présente invention est donc un dispositif pour une machine de découpage par électroérosion avec un fil-électrode tel que défini à la revendication 1.

Un deuxième objet de la présente invention est également un procédé de commande (ou de contrôle) d'une machine à découper par électroérosion tel que défini à la revendication 9. Selon ce procédé on peut ainsi faire diminuer puis augmenter un paramètre ou au contraire, le faire augmenter puis diminuer jusqu'à reprendre sa valeur initiale.

Comme dans le brevet CH 654.233, le dispositif de la présente invention permet de modifier graduellement un paramètre ayant une influence sur la géométrie, telle la fréquence des impulsions émises par le générateur, et d'évaluer les conditions d'usinage en suivant les variations de la tension moyenne d'usinage, par exemple. Mais,

- au lieu de faire varier la fréquence des décharges selon une fonction prédéterminée du temps, en procédant par paliers de durées prédéterminées, la durée des paliers de variation de la fréquence des décharges (ou d'un autre paramètre influant sur la géométrie en influant par exemple sur la puissance des impulsions) n'est plus prédéterminée. On laisse l'usinage se stabiliser après chacune de ces variations avant de procéder à la variation suivante. Ce sont donc les temps pris par ces stabilisations successives qui représentent les durées de ces paliers;
- au lieu de faire varier diminuer le paramètre en continuant à faire avancer le fil, on réalise cette variation en régime stationnaire. Il n'est donc plus nécessaire de corriger la vitesse d'avance en fonction des valeurs successives de la tension moyenne d'usinage, de façon à maintenir constante la distance d'étincelage, puisque l'avance est nulle;
- au lieu de réduire la vitesse d'avance déjà à l'approche du sommet d'un angle, la vitesse d'avance n'est réduite qu'après le sommet.

De façon surprenante, cette manière de procéder en interrompant l'avance du fil et en faisant varier par paliers les conditions d'usinage en régime stationnaire, permet de réduire de manière significative les durées de l'usinage d'un angle ou d'un arc par rapport aux usinages réalisés avec une procédure faisant appel à une variation réalisée pendant l'avance du fil.

Le paramètre que l'on désire faire varier par paliers est en général l'une des caractéristiques du régime d'usinage, en particulier de la puissance des impulsions émises par le générateur, telle la fréquence de ces impulsions, l'intensité du courant d'usinage, le temps d'étincelle ou la tension d'étincelle. Sa variation peut s'accompagner de préférence de celle d'un ou de plusieurs autres paramètres, par exemple d'une variation de la pression d'injection du liquide ou/et de la tension mécanique du fil ou/et de la vitesse de défilement de ce dernier. Ceci permet en particulier de renforcer l'action de la diminution de fréquence sur la flèche du fil.

Le facteur témoin donnant une image des conditions d'usinage est, par exemple, la tension moyenne d'usinage, la tension d'asservissement (différence entre la tension moyenne de référence et la tension moyenne d'usinage), ou la durée moyenne du délai d'amorçage des décharges.

Le seuil de référence prédéterminé atteint par ce facteur témoin à la fin de chaque palier peut être sa valeur initiale au moment de l'arrêt du fil. Dans ce cas, le premier palier est supprimé et on procède à la première diminution du paramètre V dès l'arrêt du mouvement relatif fil-pièce.

Les quantités dont on fait varier le paramètre à chaque palier ainsi que le nombre n ou n + 1 de ces paliers, la valeur V' finale qu'il atteint avant de découper un angle, ou le seuil prédéterminé atteint par le facteur témoin à la fin de chaque palier ont été, par exemple, prédéterminés expérimentalement, en choisissant les valeurs donnant une géométrie satisfaisante pour la pièce, avec une découpe d'un arc ou d'un angle la plus rapide possible, tout en évitant les courts-circuits. Ces valeurs ont été mémorisées sur un élément approprié du support d'information relié à l'unité de calcul de la commande numérique de la machine EDM. Elles sont fonction du couple matériau de la pièce/matériau et géométrie du fil-électrode.

Dans le cas de la découpe d'un arc, plus le rayon de courbure est grand, moins il sera nécessaire de diminuer le régime et donc le paramètre afin d'obtenir une bonne géométrie. Il est possible de s'arrêter à un palier intermédiaire correspondant à une valeur réduite V(x) du premier paramètre au lieu de poursuivre jusqu'à V'. Autrement dit, V(x) et n sont fonction de ce rayon : plus il est grand, plus V(x) sera proche de la valeur V initiale du paramètre et plus n sera petit; au contraire, plus il est petit, plus V(x) sera proche de la valeur V' correspondant à la découpe d'un angle, et plus n sera grand. Le terme "angle" désigne aussi bien un angle vif qu'un arrondi dont le rayon de courbure est de l'ordre de grandeur du rayon du fil-électrode, ou inférieur à ce rayon. Les endroits de la trajectoire où l'automatisme faisant l'objet de la présente invention doit être mis en oeuvre sont déterminés par une unité de calcul programmée de manière appropriée et agencée pour émettre un premier signal (signal A) actionnant le début de cet automatisme, c'est-à-dire l'arrêt du mouvement relatif fil-pièce et les diminutions successives du paramètre, puis un deuxième signal (signal B) lorsque le fil aura parcouru une longueur $l_o$ de la trajectoire en usinant avec le paramètre réduit à

4

la valeur V' ou V(x). Ce deuxième signal actionnera le début des augmentations successives du paramètre. Le calcul de $l_o$ sera différent dans le cas d'un arc ou d'un angle.

Selon une variante préférée,
- dans le cas d'un angle $\alpha$, l'unité est programmée pour calculer $l_o$ comme étant égale à

$$l_o = \frac{\text{rayon du fil R + gap g}}{tg\ \alpha/2}$$

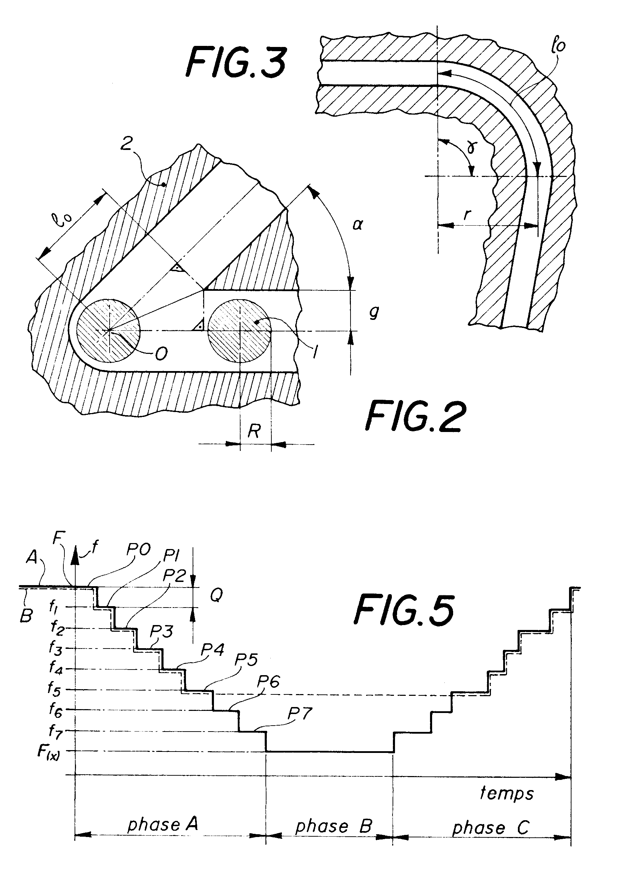

(voir figure 2);
- dans le cas d'un arc de rayon de courbure r, cette unité de calcul est programmée pour calculer $l_o$ comme étant égale à

$$l_o = \gamma r,$$

$\gamma$ étant l'angle exprimé en radians, correspondant à cet arc (voir figure 3).

Ainsi, $l_o$ ne dépend que de la géométrie et du diamètre du fil et non de la matière des électrodes et de l'épaisseur de la pièce.

La détermination de $l_o$ et l'émission des signaux A et B vers la commande numérique afin d'actionner les variations progressives de régime asservies sur le retour à l'équilibre de l'usinage, sont effectuées par l'unité de calcul sans intervention d'un programmeur. Cette unité analyse la trajectoire mise en mémoire (en étant programmée en particulier pour suivre l'évolution du rayon de courbure de cette trajectoire) et effectue des calculs simples, comme ceux indiqués ci-dessus à titre d'exemple.

L'invention sera illustrée ci-dessous par l'une des réalisations possibles, décrite uniquement à titre d'exemple, mais sans être limitée à celle-ci. Dans le dessin annexé, rappelons que
- la figure 1 schématise une machine EDM à fil-électrode selon l'état de la technique.
- la figure 2 représente les conditions lors de la découpe d'un angle.
- la figure 3 représente les conditions lors de la découpe d'un arc.
- la figure 4 illustre une machine EDM à fil-électrode munie d'un dispositif selon la présente invention.
- la figure 5 est un graphique symbolisant l'une des stratégies possibles selon la présente invention.

Selon cet exemple, on agit sur deux paramètres : la fréquence des impulsions et la pression d'injection. Le facteur témoin donnant une image des conditions d'usinage est la moyenne de la tension d'usinage obtenue par intégration sur un certain nombre de mesures successives.

On a déterminé expérimentalement que la géométrie est satisfaisante et que les courts-circuits sont évités dans un angle pour une fréquence réduite F(X) = F/8, F étant la fréquence des impulsions du régime d'usinage nominal, c'est-à-dire du régime utilisé pour usiner avant d'aborder cet angle. On a également déterminé expérimentalement qu'il faut procéder au moins par 8 diminutions successives pour passer de la fréquence nominale F à la fréquence réduite F/8 afin de découper un angle avec une géométrie satisfaisante.

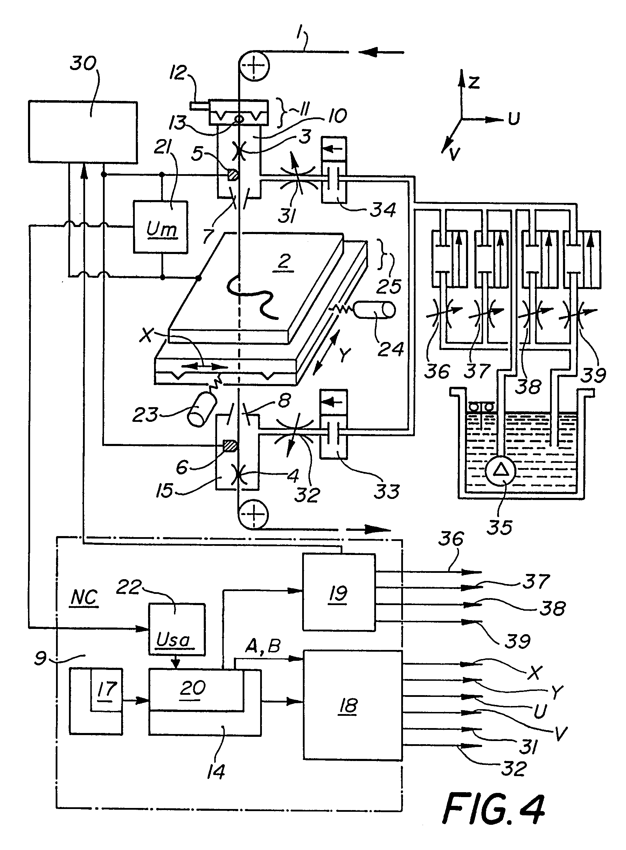

On a aussi déterminé expérimentalement (et mémorisé sur l'élément 17 du support d'information 16 de la machine EDM, schématisée à la figure 4) la relation entre le rayon de courbure r d'un arc de faible rayon de courbure et la valeur de la fréquence réduite F(x) correspondante, ou le nombre n de variations élémentaires, selon le tableau suivant :

| r en mm | F(x) | | | n |
|---|---|---|---|---|
| 0 | F(X) | = | F/8 | 8 |
| $0 < r \leq 0,5$ | F(X)+ Q1 | = | $F/8 + \dfrac{F - F/8}{8}$ | 7 |
| $0,5 < r \leq 1$ | F(X)+ 2Q1 | = | $F/8 + \dfrac{2(F - F/8)}{8}$ | 6 |
| $1 < r \leq 1,5$ | F(X)+ 3Q1 | = | $F/8 + \dfrac{3(F - F/8)}{8}$ | 5 |
| $1,5 < r \leq 2$ | F(X)+ 4Q1 | = | $F/8 + \dfrac{4(F - F/8)}{8}$ | 4 |
| $2 < r \leq 2,5$ | F(X)+ 5Q1 | = | $F/8 + \dfrac{5(F - F/8)}{8}$ | 3 |
| $2,5 < r \leq 3$ | F(X)+ 6Q1 | = | $F/8 + \dfrac{6(F - F/8)}{8}$ | 2 |
| $3 < r \leq 3,5$ | F(X)+ 7Q1 | = | $F/8 + \dfrac{7(F - F/8)}{8}$ | 1 |
| $3,5 < r$ | F(X)+ 8Q1 | = | F | 0 |

De plus, après avoir établi le régime d'usinage nominal pour usiner une pièce donnée, on détermine et mémorise la valeur moyenne $\overline{Umr}$ de la tension d'usinage qui correspond à ce régime.

Décrivons d'abord l'usinage d'un angle (voir figures 2 et 4): le fil qui usine la pièce avec un régime tel que la fréquence des impulsions a la valeur F et la pression d'injection la valeur P, arrive au point 0, le sommet de l'angle (c'est-à-dire que la ligne idéale joignant les deux guides-fil arrive à ce point 0); l'élément 20 de l'unité de calcul 14, programmé dans ce but, envoie un premier signal A à l'unité de contrôle 18 de la commande numérique 9 qui arrête le mouvement relatif fil-pièce.

On mesure en continu la tension d'usinage Um, grâce à un circuit de mesure 21 de type connu, tel que celui décrit dans le brevet CH 654 233. Grâce à un deuxième circuit 22 on détermine sa moyenne $\overline{Um}$ et on la compare à la valeur $\overline{Umr}$ de cette moyenne obtenue en régime nominal. Le signal d'erreur

$$Usa = \overline{Um} - \overline{Umr}$$

croît progressivement suite à l'augmentation du gap consécutive à l'arrêt de l'avance du fil. Il est déterminé en continu par le circuit 22. Lorsque Usa atteint un seuil prédéterminé Usa/ref, c'est la fin du palier 0. L'élément 17 émet un signal qui actionne une première diminution $Q_1$ de la fréquence f et $Q_2$ de la pression p, telles que

$$Q_1 = \frac{F - F/8}{8} \quad et \quad Q_2 = \frac{P - P/8}{7}$$

6

On réalise de préférence la diminution de la pression d'injection du liquide d'usinage avec un palier de moins que pour la fréquence, afin que la variation de cette pression d'injection soit nulle lors de la dernière variation de fréquence, ce qui diminue le risque de courts-circuits, le fil présentant alors une flèche minimum. Ceci évite aussi au maximum que le fil ne soit déporté au redémarrage (alors qu'il n'est pas encore en pleine matière) et durant l'usinage de l'angle.

Le contrôle de la pression est effectué par une batterie de quatre électrovannes 36 à 39 montées en parallèle sur le by-pass de la pompe haute-pression 35 amenant le liquide d'usinage depuis un réservoir jusqu'au réseau de distribution vers les buses d'injection 7 et 8 et le bac de travail.

On attend ensuite que $\overline{Um}$ atteigne à nouveau son seuil prédéterminé (c'est-à-dire que Usa = Usa/ref) et le circuit 22 émet un nouveau signal (à travers l'élément 20) vers l'élément 19 afin de décrémenter à nouveau la fréquence de la quantité $Q_1$ et la pression de la quantité $Q_2$ (palier 1 ).

On décrémente ainsi la fréquence f et la pression p jusqu'à une pression d'injection égale à P/8 et une fréquence égale à F/8, donc, dans cet exemple, après avoir effectué 8 variations élémentaires pour la fréquence et 7 pour la pression d'injection , et observé 8 paliers. (Voir Figure 5, courbe A). Dans certains cas, un certain délai est nécessaire à Usa pour atteindre une valeur permettant l'avance du fil. On observe alors 9 paliers.

Cette diminution de régime ainsi réalisée, le circuit 22 envoie (à travers l'élément 20) un signal B à l'unité 18 de la commande numérique qui actionne parcours du segment $l_o$ de trajectoire à régime réduit.

La machine EDM utilisée dans cet exemple est équipée d'un circuit de régulation automatique intégré, permettant d'asservir la vitesse du mouvement relatif fil-pièce sur $\overline{Umr}$. Donc la vitesse à laquelle le fil va parcourir $l_o$ est fixée automatiquement.

Lorsque le fil a parcouru la distance $l_o$ calculée comme indiquée ci-dessus, l'unité de calcul envoie alors un signal à l'élément de commande numérique 19 afin que celui-ci actionne une première augmentation $Q_1$ de la fréquence et $Q_2$ de la pression d'injection, après avoir observé un premier palier ; on les incrémente des quantités $Q_1$ et $Q_2$ en 8 variations successives pour la fréquence et 7 variations successives pour la pression d'injection, selon 8 paliers successifs (voir Figure 5, courbe A).

A chacune de ces augmentations, $\overline{Um}$ et Usa augmentent, puis, comme le gap se réduit suite à l'avance du fil, la tension $\overline{Um}$ se stabilise à la valeur $\overline{Umr}$. Dès que Usa = 0, le palier correspondant est terminé et les paramètres subissent une nouvelle incrémentation.

Décrivons maintenant l'usinage d'un arc (voir figure 3). L'arc en question a un rayon de courbure de 1,26 mm. On procède de la même façon que ci-dessus, en décrémentant puis en incrémentant la fréquence des impulsions de la quantité $Q_1$ en 5 variations successives (d'après le tableau donnant la relation entre le rayon de courbure et la fréquence réduite), et la pression d'injection de la quantité $Q_2$ en 4 variations successives et en observant donc 6 paliers (voir Figure 5, courbe B).

Cette relation qui est déjà mémorisée sur l'élément 17, a ainsi permis à l'élément 20 de l'unité de calcul 14 de sélectionner automatiquement une valeur appropriée pour la fréquence et la pression réduite, et d'envoyer les signaux correspondants au nombre de paliers voulus. Les quantités $Q_1$ et $Q_2$ calculées ci-dessus dans le cas d'un angle restent les mêmes.

A la fin du dernier palier, dès que Usa = Usa/ref et avant de remettre en marche le mouvement relatif pièce-fil, l'élément 20 de l'unité de calcul 14 envoie à l'élément 19 de la commande numérique un signal pour actionner le parcours à régime réduit.

Il est particulièrement surprenant que bien qu'aucune durée prédéterminée n'ait été assignée aux paliers de variation de régime comme dans la demande suisse 99/89 , l'usinage d'un angle ou d'un arc soit plus rapide que lorsque les variations de régime sont effectuées par paliers de durées fixes comme décrit dans la demande de brevet suisse 99/89. Ainsi, pour usiner un angle de 90° dans une pièce de 80 mm, lorsqu'on diminue puis augmente la fréquence toutes les 7,5 secondes, le temps d'exécution est de 121 secondes. En procédant selon la présente invention, le temps n'est que de 47 secondes. Dans les deux cas, la distance $l_o$ était la même.

Lorsque la pièce n'est pas trop épaisse, au lieu de diminuer la pression d'injection jusqu'à P/8, on peut même usiner l'arc ou l'angle avec une pression d'injection nulle. Dans ce cas, $Q_2$ = P/7. Dans cet exemple, les variations des paramètres sont réalisées par quantités $Q_1$ et $Q_2$ égales pour chaque palier, mais il est aussi possible de les faire varier d'un palier à un autre.

Un autre avantage de la présente invention est la simplification qu'elle apporte, tant du point de vue de l'appareillage que de la programmation. Il n'est plus nécessaire de réguler la distance d'étincelage suite aux variations imposées à la fréquence des impulsions, comme le demandait, par exemple, l'usinage décrit dans CH 654.233.

Les procédures automatiques de variation de paramètre selon la présente invention sont beaucoup plus simples que celles exposés dans l'état de la technique, par exemple dans EP 67 876 : détection de la flèche du fil et de la largeur de la fente découpée (gap) (nécessitant un arrêt de l'usinage) et calcul d'une vitesse réduite selon une formule faisant intervenir le rayon de courbure, le gap et cette flèche, cette dernière dépendant du type de fil, de l'épaisseur de la pièce, de la distance entre les guides-fil, de la pression d'injection, de la puissance du courant d'usinage, de la tension mécanique du fil, et... Les procédures selon la présente invention ne nécessitent aucun arrêt de l'usinage et aucun circuit spécial avec senseurs permettant de mesurer la flèche et le gap. Elles sont indépendantes de la plupart de ces facteurs, en particulier de l'épaisseur de la pièce et de la flèche du fil. Elles ne font pas intervenir la variation de la vitesse d'avance. Elles ne font pas appel à une correction de la trajectoire mise en mémoire afin de compenser les défauts de géométrie dues à cette flèche.

Elles présentent un autre avantage : elles peuvent être combinées facilement avec d'autres stratégies, telles des stratégies de protection utilisées pour réduire le régime d'usinage lorsqu'il y a, par exemple, risque de rupture du fil, et le rétablir lorque ce risque a disparu, comme celles décrites dans la demande de brevet 100/89.

Il peut y avoir conflit lorsque deux courbes de petits rayons de courbure se suivent ou lorsqu'une courbe de ce type suit de très près un angle, par exemple. Là encore, la présente invention permet de régler très simplement le chevauchement de deux automatismes. En effet, chaque automatisme selon la présente invention comprend 3 phases très facilement dissociables : le rattrapage de la flèche en usinage stationnaire par une diminution du régime par palier (phase A); un parcours à régime réduit sur une longueur donnée (phase B), une remise au régime initial, par paliers (phase C). Chacune des phases A et C peut être soit interrompue soit enclenchée à l'un quelconque des paliers.

Le fil peut se trouver, par exemple, au sommet d'un angle ou à l'entrée d'une courbe de petit rayon, alors que le régime d'usinage a déjà été réduit à une valeur $V(x)_1$, suite à un risque de rupture du fil, par exemple. Le régime réduit avec lequel il est prévu d'usiner l'angle ou le sommet correspond à une valeur $V(x)_2$ de ce paramètre.

- Si $V(x)_2 < V(x)_1$ , on procède à la réduction du paramètre, jusqu'à ce qu'il atteigne $V(x)_2$, mais en partant d'un palier correspondant à la valeur actuelle du paramètre au lieu du palier 0 correspondant à sa valeur V initiale; $V(x)_1$ devient une limite supérieure pour la remise en régime.
- Si $V(x)_2 \geq V(x)_1$ : on annule la réduction programmée pour l'usinage de l'angle ou de la courbe, puisque le paramètre est déjà suffisamment réduit; on n'arrête pas l'avance du fil, et on procède directement à la phase B. La valeur $V(x)_1$ devient une limite supérieure pour la procédure de protection.

Le fil peut aussi se trouver au sommet d'un angle ou à l'entrée d'une courbe de petit rayon, alors que le régime d'usinage, qui avait été réduit auparavant suite à un risque de rupture du fil ou à l'usinage d'un angle ou d'une courbe précédente, est en cours d'augmentation. Le paramètre présente une valeur actuelle $V(x)_3$.

- Si $V(x)_2 < V(x)_3$ : on arrête la procédure en cours, on arrête l'avance du fil et on procède à la réduction du paramètre, jusqu'à ce qu'il atteigne $V(x)_2$, mais en partant d'un palier correspondant à la valeur actuelle $V(x)_3$ du paramètre au lieu du palier 0 correspondant à sa valeur V initiale;
- si $V(x)_2 \geq V(x)_3$ : on annule l'automatisme prévu pour la phase A (réduction de régime en usinage stationnaire avant d'usiner l'angle ou la courbe), et $V(x)_2$ devient la limite de la remontée du régime prévue par la procédure déjà en cours; le paramètre ayant déjà atteint (et même dépassé) la valeur souhaitée, on procède immédiatement aux phases B et C prévues pour usiner l'angle ou la courbe.

La présente invention peut être utilisée non seulement pour faire varier les conditions d'usinage de manière à usiner un angle ou un arc avec un régime d'usinage approprié, mais aussi pour arrêter ou reprendre un usinage dans le cas, par exemple, d'un arrêt volontaire ou d'une baisse de régime suite à l'apparition d'un risque de rupture ou de courts-circuits. Elle permet en particulier d'éviter les courts-circuits au redémarrage d'un usinage.

## Revendications

1. Dispositif pour une machine de découpage par électroérosion avec un fil-électrode (1), selon une trajectoire prédéterminée et comportant un générateur (30) connecté entre les deux électrodes (1,2) et émettant des impulsions de tension, une commande numérique (9, 18, 19) commandant les déplacements relatifs entre la pièce (2) et les guides-fil (3,4) grâce à un élément (18) et les paramètres d'usinage, tels les caractéristiques des impulsions émises par le générateur (30) et la pression d'injection du liquide d'usinage dans la fente usinée par le fil (1), grâce à un autre élément (19), ainsi qu'une unité de calcul et de traitement (20) agencée pour produire vers les éléments (18, 19) des signaux commandant l'arrêt du mouvement relatif entre le fil (1) et la pièce (2) dès qu'elle a détecté que le fil (1) aborde le sommet d'un angle ou le début d'un arc et la variation d'au moins un paramètre d'usinage de sa valeur initiale V jusqu'à une valeur finale prédéterminée V', puis pour actionner le parcours d'une distance lo de la trajectoire prédéterminée par calcul en maintenant le(s) paramètre(s) à cette valeur finale V', et enfin, dès qu'elle a détecté la fin de ce parcours, pour commander le retour de ce paramètre à sa valeur initiale V, ce dispositif comportant les moyens suivants, associés à cette unité (20) et à la commande (9) et agencés pour effectuer les variations de ce paramètre par paliers dont la durée est asservie aux fluctuations d'un facteur témoin donnant une image des conditions régnant dans la fente d'étincelage :

- un élément (17) de support d'information, associé à l'unité (20) et mémorisant le nombre de paliers et/ou la valeur finale V' et/ou les valeurs de chaque variation élémentaire,
- un circuit de mesure (21) suivant ou déterminant en continu les fluctuations du facteur témoin et
- un deuxième circuit (22) relié au précédent, destiné à comparer en continu ce facteur à un seuil de référence et à émettre vers l'unité (20) et les éléments (18, 19) de la commande (9) un signal déclenchant, soit les variations élémentaires du paramètre, soit l'arrêt de la procédure de variation lorsqu'il a atteint sa valeur finale V' ou est revenu à sa valeur initiale V, ou lorsqu'un nombre prédéterminé de paliers a été effectué.

2. Dispositif selon la revendication 1, agencé pour effectuer la variation par paliers de la fréquence des impulsions de tension émise par le générateur (30).

3. Dispositif selon la revendication 2, également agencé pour effectuer la variation par paliers de la pression d'injection du liquide d'usinage dans la fente d'étincelage.

4. Dispositif selon la revendication 3, relié à une batterie d'électrovannes (36,37,38,39) actionnées par la commande numérique (9) et conçues pour réaliser des variations élémentaires de la pression d'injection.

5. Dispositif selon la revendication 1, dans lequel les variations élémentaires du paramètre, mémorisées par l'élément (17) de support d'information, sont de valeur constante.

6. Dispositif selon la revendication 1, dans lequel le circuit de mesure (21) suivant ou déterminant en continu les fluctuations du facteur témoin, comporte un organe destiné à mesurer la tension d'usinage Um régnant entre la pièce à usiner (2) et le fil-électrode (1).

7. Dispositif selon la revendication 6, dans lequel le deuxième circuit (22) qui est relié au circuit (21) comporte les moyens de déterminer une valeur moyenne $\overline{Um}$ de cette tension d'usinage, d'en déduire la différence Usa avec une tension moyenne de référence $\overline{Umr}$ et de comparer la valeur de Usa ainsi obtenue à un seuil de référence prédéterminé.

8. Dispositif selon la revendication 7, dans lequel ce deuxième circuit (22) comporte des moyens pour intégrer la valeur de Usa sur une durée déterminée.

9. Procédé de commande d'une machine à découper par électroérosion avec un fil-électrode (1) selon une trajectoire prédéterminée, pour faire varier au moins un paramètre d'usinage d'une valeur initiale V' à une valeur finale prédéterminée V', lorsque le fil-électrode (1) atteint le sommet d'un angle ou aborde un arc, puis pour ramener cette valeur V' à sa valeur initiale V à la fin de la découpe de l'angle ou de l'arc, lorsqu'une distance $I_o$ a été parcourue, et dans lequel on calcule les endroits de la trajectoire où doivent être enclenchées ces variations et on arrête le mouvement relatif entre le fil-électrode (1) et la pièce (2) à usiner dès que le fil (1) atteint le sommet d'un angle ou aborde un arc, caractérisé par les étapes suivantes :

- détermination en continu des fluctuations d'un facteur témoin donnant une image des conditions régnant dans la fente d'usinage, et lorsque la valeur de ce dernier atteint un seuil prédéterminé, variation de la valeur du paramètre d'une quantité Q prédéterminée, cette variation faisant fluctuer à nouveau ce facteur témoin,
- lorsque la valeur de ce facteur revient au seuil prédéterminé, nouvelle variation de la valeur du ou des paramètre(s), cette variation étant poursuivie par paliers jusqu'à la valeur finale V' désirée ou jusqu'à ce qu'un nombre prédéterminé de paliers aient été effectués,

- reprise du mouvement relatif entre le fil-électrode (1) et la pièce (2) en maintenant le(s) paramètre(s) à cette valeur finale V',
- lorsque le fil (1) a parcouru la distance $l_o$ , variation en sens inverse du ou des paramètre(s), par paliers successifs dont la durée est déterminée comme précédemment par la comparaison en continu, avec un seuil de référence, du facteur témoin, jusqu'à ce que chaque paramètre ait repris sa valeur V initiale ou qu'un nombre prédéterminé de paliers aient été effectués.

**10.** Procédé selon la revendication 9, dans lequel les incréments et les décréments appliqués à un paramètre sont tous égaux.

**11.** Procédé selon la revendication 9, dans lequel le seuil prédéterminé atteint par le facteur à la fin de chaque palier est sa valeur en usinage en ligne droite.

**12.** Procédé selon la revendication 9, dans lequel les paramètres que l'on fait varier sont la fréquence des impulsions et/ou la pression d'injection du liquide d'usinage dans la fente d'étincelage.

**13.** Procédé selon la revendication 9, dans lequel on mesure en continu la tension d'usinage régnant entre la pièce (2) à usiner et le fil-électrode (1).

**14.** Procédé selon la revendication 13, dans lequel on détermine la valeur moyenne $\overline{Um}$ de cette tension d'usinage, on en déduit la différence Usa avec la tension moyenne de référence $\overline{Umr}$ et on compare la valeur de Usa ainsi obtenue à un seuil de référence prédéterminé.

**15.** Procédé selon la revendication 9, dans lequel l'étape de calcul comprend une opération arithmétique qui consiste à déterminer la distance $l_o$ qui doit être parcourue en maintenant chaque paramètre à sa valeur finale V', comme étant égale à

$$l_o = \frac{R + g}{tg\ \alpha/2}$$

R étant le rayon du fil, g la distance d'étincelage, $\alpha$ la valeur de l'angle à découper.

**16.** Procédé selon la revendication 9, dans lequel l'étape de calcul comprend une opération arithmétique qui consiste à déterminer la distance $l_o$ qui doit être parcourue en maintenant chaque paramètre à sa valeur finale V', comme étant égale à

$$l_o = \gamma \cdot r,$$

$\gamma$ étant la valeur en radians de l'angle correspondant à l'arc à découper, et r étant le rayon de courbure de cet arc.

**Claims**

**1.** Device for a cutting machine by electroerosion with a wire-electrode (1), along a predetermined cutting path and including a generator (30) connected between the two electrodes (1,2) and emitting voltage pulses, a numerical control unit (9,18,19) for controlling the relative movements between the work-piece (2) and the wire guides (3,4) owing to an element (18) and the machining parameters, such as the characteristics of the pulses emitted by the generator (30) and the pressure of injection of the machining fluid into the slot cut by the wire (1), owing to another element (19), including also a computing and processing unit (20) for sending to the numerical control elements (18,19) signals which stop the relative movement between the wire (1) and the workpiece (2) in response to its detecting that the wire (1) is reaching the apex of an angle or is approaching an arc, and which initiates the variation of at least one machining parameter from its initial value V to a predetermined end value V', said computing and processing unit (20) being also intended for operating the run along a distance lo of the path, said distance lo being predetermined by calculation, while maintaining the parameter(s) at that end value V', and then for operating the return of said parameter to its initial value V in response to the detecting of the end of said run, said device comprising following means connected to above unit (20) and control unit (9) for performing the variations of said parameter in successive steps in a manner that the durations of these steps are slaved to the fluctuations of a pilot factor giving an image of the conditions existing in the machining slot:

- a data processing element (17) connected to unit (20) and memorising the number of steps and/or the end value V' and/or the values of each elementary variation;

a measurement circuit (21) controlling and determining continuously the fluctuations of said pilot factor; and

a second circuit (22) connected to above circuit for comparing continuously this pilot factor to a reference threshold and for sending to unit (20) and to elements (18,19) of the control unit (9) a signal for either starting the elementary variations of the parameter or for stopping said variation when the parameter has reached its end value V' or has returned again to its initial value V or when a predetermined number of steps have been performed.

2. The device according to claim 1, designed for performing the stepped variation of the frequency of the voltage pulses emitted by the generator (30).

3. The device according to claim 2, also designed for performing the stepped variation of the injection pressure at which the machining fluid is injected into the machining slot.

4. The device according to claim 3, which is connected to a bank of solenoid valves (36,37,38,39) controlled by the numerical control unit (9) and designed for performing elementary variations of the injection pressure.

5. The device according to claim 1, in which the elementary variations of the parameter which are memorised by the data processing element (17) have a constant value.

6. The device according to claim 1, in which the measurement circuit (21) for controlling and determining continuously the fluctuations of the pilot factor presents an organ for measuring the machining voltage Um existing between the workpiece (2) and the wire-electrode (1).

7. The device according to claim 6, in which said second circuit (22) which is connected to circuit (21) comprises means for determining a mean value Um for this machining voltage, for deriving therefrom the difference Usa between said mean value and an average reference voltage Umr and for comparing Usa to a predetermined reference threshold.

8. The device according to claim 7, in which said second circuit (22) further comprises means for integrating the value of Usa over a determined period of time.

9. A control process for a cutting machine by electroerosion with a wire-electrode (1), along a predetermined cutting path, so as to vary at least one machining parameter from an initial value V up to a predetermined end value V' when the wire-electrode (1) reaches the apex of an angle or approaches an arc, and so as to bring this value V' back to its initial value V at the end of cutting of the angle or arc, when a distance lo has been run, and in which the points of said path where these variations have to be initiated are calculated and the relative movement between the wire-electrode (1) and the workpiece (2) stopped as soon as the wire (1) reaches the apex of an angle or approaches an arc, said control process comprising the stages of:

- continuously determining the fluctuations of a pilot factor giving an image of the conditions existing in the machining gap and when the value of that pilot factor reaches a predetermined reference threshold, varying the value of the parameter by a predetermined quantity Q, this variation causing in turn a further variation of this pilot factor,

- when the value of that pilot factor returns to the predetermined threshold, varying anew the value of the parameter(s), this kind of elementary variations being steppedly continued until the scheduled end value V' is reached or until a predetermined number of steps have been performed,

- restarting the relative movement between the wire-electrode (1) and the workpiece (2) and maintaining the parameter(s) at the end value V',

11

EP 0 378 278 B1

- when the wire (1) has run the distance lo, varying in opposite direction of the parameter(s), by successive variation steps, the durations of which are determined as above by the continuously comparison of the pilot factor with a reference threshold, until each parameter has returned again to its initial value V or until a predetermined number of steps have been performed.

10. Process according to claim 9, in which the increments and decrements applied to a parameter are all equal.

11. Process according to claim 9, in which the predetermined reference threshold reached by the pilot factor at the end of each step is its value corresponding to machining along a straight line.

12. Process according to claim 9, in which the parameters which are made to vary are the frequency of the voltage pulses and/or the injection pressure of the machining liquid in the machining slot.

13. Process according to claim 9, in which the machining voltage existing between the workpiece (2) and the wire-electrode (1) is continuously measured.

14. Process according to claim 13, in which the mean value Um of this machining voltage is determined, the difference Usa between it and an average reference voltage Umr is then derived therefrom and the value of Usa thus obtained is compared to a predetermined reference threshold.

15. Process according to claim 9, in which the computing stage comprises an arithmetical operation consisting in the determination of the distance lo which is to be run while maintaining each parameter at its end value V', as being equal to:

$$lo = \frac{R + g}{\tan \alpha/2}$$

where R is the radius of the wire, g the sparking distance, $\alpha$ the value of the angle to be cut.

16. Process according to claim 9, in which the computing stage comprises an arithmetical operation consisting in the determination of the distance lo which is to be run while maintaining each parameter at its end value V', as being equal to:

lo = $\gamma$ r,

where $\gamma$ is the value in radians of the angle corresponding to the arc to be cut, and r the radius of curvature of this arc.

**Patentansprüche**

1. Vorrichtung für eine Maschine zum elektroerosiven Schneiden mit einer Drahtelektrode (1) längs einer vorbestimmten Bahn, und einem, zwischen die beiden Elektroden (1,2) geschalteten und Spannungsimpulsen abgebenden Generator (30) aufweist, sowie eime numerische Steuerung (9,18,19) für die Relativbewegungen zwischen dem Werkstück (2) und den Drahtführungen (3,4) dank einem Steuerglied (18) und für die Arbeitsparameter, wie die Eigenschaften der durch den Generator (30) abgegebenen Impulse und der Einspritzdruck der Arbeitsflüssigkeit in den durch die Drahtelektrode (1) erzeugten Spalt, dank einem anderen Steuerglied (19), sowie eine Rechner- und Behandlungseinheit (20), die so ausgebildet ist, dass sie, sobald sie festgestellt hat, dass der Draht (1) die Spitze eines Winkels oder den Anfang eines Bogens erreicht hat, das Anhalten der Relativbewegungen zwischen dem Werkstück (2) und dem Draht (1) und die Änderung des Anfangswertes V wenigstens eines Arbeitsparameters bis zu einem vorbestimmten Endwert V' bewirkende Signale an den Steuergliedern (18, 19) abgibt, dass sie die Durchfahrt einer durch Berechnen vorbestimmten Bahnstrecke lo bewirkt, wobei jedes Arbeitsparameter seinen Endwert V' beibehält, und dass sie, sobald sie die Ende dieser Bahnstrecke festgestellt hat, die Rückkehr dieses Parameters an seinen Anfangswert V bewirkt, wobei diese

12

Vorrichtung folgende Mitteln aufweist, die mit dieser Einheit (20) und der Steuerung (9) mitwirken und zur Durchführung der Änderungen dieses Parameters in Stufen deren Dauer durch die Schwänkungen eines kennzeichnenden, ein Bild der im Arbeitsspalt herrschenden Zustände liefernden Faktors gesteuert wird, ausgebildet sind:

- ein mit der Einheit (20) mitwirkenden, informationstragenden Element (17), das die Zahl der Stufen und/oder den Endwert V' und/oder die Grösse jeder elementaren Änderung speichert,
- ein Messkreis (21), der die Schwänkungen des kennzeichnenden Faktors kontinuierlich folgt oder bestimmt,
- ein zweiter, mit dem vorhergehenden Kreis verbundener Schaltkreis (22), der diesen Faktor mit einem Schwellenwert kontinuierlich vergleicht und ein Signal an der Einheit (20) sowie an den Steuergliedern (18,19) abgibt, das entweder die elementaren Änderungen des Parameters, oder ein Beendigen des Änderungsverfahrens bewirkt, wenn das Parameter seinen Endwert V' erreicht hat oder zu seinem Anfangswert V zurückgekehrt ist oder wenn eine vorbestimmte Anzahl von Stufen durchgeführt worden sind.

2. Vorrichtung nach Anspruch 1, die zur stufenweise Änderung der Frequenz der durch den Generator (30) abgegebenen Spannungsimpulsen ausgebildet ist.

3. Vorrichtung nach Anspruch 2, die ebenfalls zur stufenweise Änderung des Einspritzdrucks der Arbeitsflüssigkeit in den Elektroerosionsspalt ausgebildet ist.

4. Vorrichtung nach Anspruch 3, die an eine, durch die numerische Steuerung (9) geschäftigte, und zur Ausführung elementarer Änderungen des Einspritzdrucks ausgebildete Batterie von mehreren Elektroventilen (36,37,38,39), angeschlossen ist.

5. Vorrichtung nach Anspruch 1, in welcher die durch das informationstragenden Element (17) gespeicherten, elementaren Änderungen des Parameters, einen konstanten Wert aufweisen.

6. Vorrichtung nach Anspruch 1, in welcher der die Schwänkungen des kennzeichnenden Faktors kontinuierlich folgenden oder bestimmenden Messkreis (21) ein Organ aufweist, das zur Messung der zwischen dem Werkstück (2) und der Drahtelektrode (1) herrschenden Arbeitsspannung Um vorgesehen ist.

7. Vorrichtung nach Anspruch 6, in welcher der zweiten, mit dem Messkreis (21) verbundenen Schaltkreis (22) Mittel zum Bestimmen eines Mittelwertes Um dieser Arbeitsspannung, zum davon Abrechnen der Differenz Usa zu einer mittleren Referenzspannung Umr sowie zum Vergleichen des so erhaltenen Wert für Usa mit einem vorbestimmten Bezugsschwellenwert umfasst.

8. Vorrichtung nach Anspruch 7, in welcher dieser zweiten Schaltkreis (22) Mittel zum Integrieren des Wertes von Usa auf einer bestimmten Dauer umfasst.

9. Verfahren zum Steuern einer Maschine zum elektroerosiven Schneiden mit einer Drahtelektrode (1) längs einer vorbestimmten Bahn unter Variieren wenigstens eines Arbeitsparameters von einem Anfangswert V bis zu einem vorbestimmten Endwert V' wenn die Drahtelektrode (1) die Spitze eines Winkels oder den Anfang eines Bogens erreicht, wonach der Wert V' auf den Anfangswert V am Ende des Schneidens des Winkels oder des Bogens zurückgebracht wird, wenn eine Strecke lo durchgefahrt ist, und indem die Bahnstellen, wo diese Änderungen einzuschalten sind, berechnet und die Relativbewegungen zwischen der Drahtelektrode (1) und dem Werkstück (2) angehaltet werden wenn die Drahtelektrode (1) die Spitze eines Winkels oder den Anfang eines Bogens erreicht, gekennzeichnet durch folgende Schritte:

- kontinuierliche Bestimmung der Schwänkungen eines kennzeichnenden, ein Bild der im Arbeitsspalt herrschenden Zustände liefernden Faktors, und wenn der Wert dieses Faktors einen vorbestimmten Schwellenwert erreicht, Änderung des Wertes des Parameters um eine vorbestimmte Grösse Q, wobei diese Änderung erneut das kennzeichnenden Faktor ändert,
- wenn der Wert dieses kennzeichnenden Faktors erneut den vorbestimmten Schwellenwert erreicht, erneute Änderung des Wertes des oder der Parameter, wobei diese Änderung in Stufen durchgeführt wird, bis der gewünschte Endwert V' oder bis eine vorbestimmte Zahl von Stufenweisen Änderungen vorgenommen worden sind,

- Wiederaufnahme der Relativbewegungen zwischen der Drahtelektrode (1) und dem Werkstück (2) wobei jedes Arbeitsparameter an seinen Endwert V' beigehaltet wird,
- wenn der Draht (1) die Bahnstrecke lo durchgefahren hat, Änderung des oder der Parameter im umgekehrten Sinne, in aufeinanderfolgenden Stufen, wobei die Dauer dieser Stufen wie vorher durch kontiniuerlichen Vergleich mit einem Bezugsschwellenwert des kennzeichnenden Faktors bestimmt wird, bis jeder Parameter auf seinen Anfangswert V zurückgebracht wird oder bis eine vorbestimmte Anzahl von Änderungsstufen durchgeführt worden sind.

10. Verfahren nach Anspruch 9, in welchem die an einem Parameter angewandeten Inkremente und Dekremente alle gleich sind.

11. Verfahren nach Anspruch 9, in welchem der durch das kennzeichnenden Faktor am Ende jeder Stufe erreichte, vorbestimmte Schwellenwert, sein Wert für ein Schneiden längs einer geraden Linie ist.

12. Verfahren nach Anspruch 9, in welchem die Parameter,die variiert werden, die Frequenz der Impulse und/oder der Einspritzdruck der Arbeitsflüssigkeit in den Arbeitsspalt sind.

13. Verfahren nach Anspruch 9, in welchem die zwischen dem Werkstück (2) und der Drahtelektrode (1) herrschende Arbeitsspannung gemessen wird.

14. Verfahren nach Anspruch 13, in welchem der Mittelwert Um dieser Arbeitsspannung bestimmt, die Differenz Usa zur mittleren Referenzspannung Umr davon abrechnet und der so erhaltene Wert für Usa mit einem vorbestimmten Bezugsschwellenwert verglichen wird.

15. Verfahren nach Anspruch 9, in welchem der Schritt des Berechnen eine arithmetische Operation umfasst, die darin besteht, die Strecke lo, die indem jedes Arbeitsparameter an seinen Endwert V' beigehaltet wird durchzufahren ist, gemäss der Gleichung

$$l_o = \frac{R + g}{tg\ \alpha/2}$$

berechnet wird, wobei R der Radius des Drahtes, g die Spaltbreite und $\alpha$ der zu schneidende Winkel sind.

16. Verfahren nach Anspruch 9, in welchem der Schritt des Berechnen eine arithmetische Operation umfasst, die darin besteht, die Strecke lo, die indem jedes Arbeitsparameter an seinen Endwert V' beigehaltet wird durchzufahren ist, gemäss der Gleichung

$$l_o = \gamma r,$$

berechnet wird, wobei $\gamma$ der im Bogenmass ausgedrückte Winkel und r der Krummungsradius des zu schneidenden Bogens sind.

FIG.1

EP 0 378 278 B1

# FIG.3

## FIG.2

## FIG.5

phase A · phase B · phase C

temps

*FIG.4*